Europäisches Patentamt

European Patent Office

Office européen des brevets

(11) Publication number: **0 358 454**
A2

# EUROPEAN PATENT APPLICATION

(21) Application number: **89308975.5**

(22) Date of filing: **05.09.89**

(51) Int. Cl.⁵: **B 62 H 3/08**

(30) Priority: **05.09.88 ZA 886576**

(43) Date of publication of application:
**14.03.90 Bulletin 90/11**

(84) Designated Contracting States:
**AT BE CH DE ES FR GB GR IT LI LU NL SE**

(71) Applicant: **INTERNATIONAL BICYCLE CORPORATION
P.O. Box 71
Craigmuir Chambers Road Town Tortola (VG)**

(72) Inventor: **Coetzee, Abel Olwagen
Plot 117 Witfontein
Pretoria North Transvaal Province (ZA)**

(74) Representative: **Crisp, David Norman et al
D. YOUNG & CO. 10 Staple Inn
London, WC1V 7RD (GB)**

(54) Pedal.

(57) A bicycle pedal has a footplate with a vertically extending transverse support to which is attached a padded foot stop. The foot stop is attached to the transverse support by a rod, and can be adjusted to vary the distance between the foot stop and footplate to snugly grip the foot of a cyclist. The transverse support has a bearing which enables the pedal to be attached to the crank arm of a bicycle.

EP 0 358 454 A2

Bundesdruckerei Berlin

Description

# PEDAL

## FIELD OF INVENTION
THIS INVENTION relates to a pedal.

## BACKGROUND TO THE INVENTION
More particularly, but not exclusively, the pedal of this invention can be used with the conventional crank system of a bicycle. Bicycle pedals are well known, and in use with racing bicycles, these pedals most often have straps or foot clamps or the like for ensuring that a user's feet are retained against the pedal.

This can cause considerable difficulties since the release of a user's foot from the pedal may be required in an emergency, and this cannot usually easily be done. Furthermore, it is sometimes desired to use the pedal by applying force in an upward direction, and to have the feet secured to the pedal in doing so.

## OBJECT OF THE INVENTION
It is an object of this invention to provide a pedal which can provide support for a bicycle user's foot in an upward direction, and a bicycle for use with such a pedal.

## SUMMARY OF THE INVENTION
In accordance with this invention there is provided a pedal comprising a footplate with a transverse support having means for receiving a crank arm, and a foot stop spaced operatively above the footplate, the foot stop being selectively adjustable to vary the distance between it and the footplate.

Further features of the invention provide for the transverse support to carry the foot stop, and for the foot stop to be eccentric to an axis about which it is selectively rotatable, to thereby vary the said spaced apart distance.

There is also provided for the foot stop to have a surround with a generally centrally located rod therein, with one end rotatably mounted to the transverse support, and for the rod to be selectively rotatable by being axially slidable against biasing, to free axially extending stop means on one of the support or the foot stop, from engagement in co-operating formations on the other of the foot stop or support, and to be axially slidable to re-engage the stop means and formations. In this case, the surround is located eccentrically around the rod. Alternatively the foot stop surround can be concentric with rod which is eccentric to its rotatable mounting.

Alternatively, there is provided for the foot stop to be located in a slidable mounting to be releasable and securable in varying positions of slide to and from the footplate, to vary the distance therebetween.

Preferably the foot stop is axially clampable and mounted through a slot in the transverse support to be clampable in a position of slide within the slot.

## BRIEF DESCRIPTION OF THE DRAWINGS
Preferred embodiments of the invention are described below by way of example only, and with reference to the accompanying drawings, in which:

Figure 1 is a sectional side view of one embodiment of the invention;

Figure 2 is a portion of an end view of the embodiment of Figure 1;

Figure 3 is a portion of an end view of an alternate embodiment; and

Figure 4 is a sectional side view of the embodiment of Figure 3;

Figure 5 is a sectional side view of a further alternative embodiment to that of Figures 1 and 2; and

Figure 6 is a side view of a bicycle according to the invention.

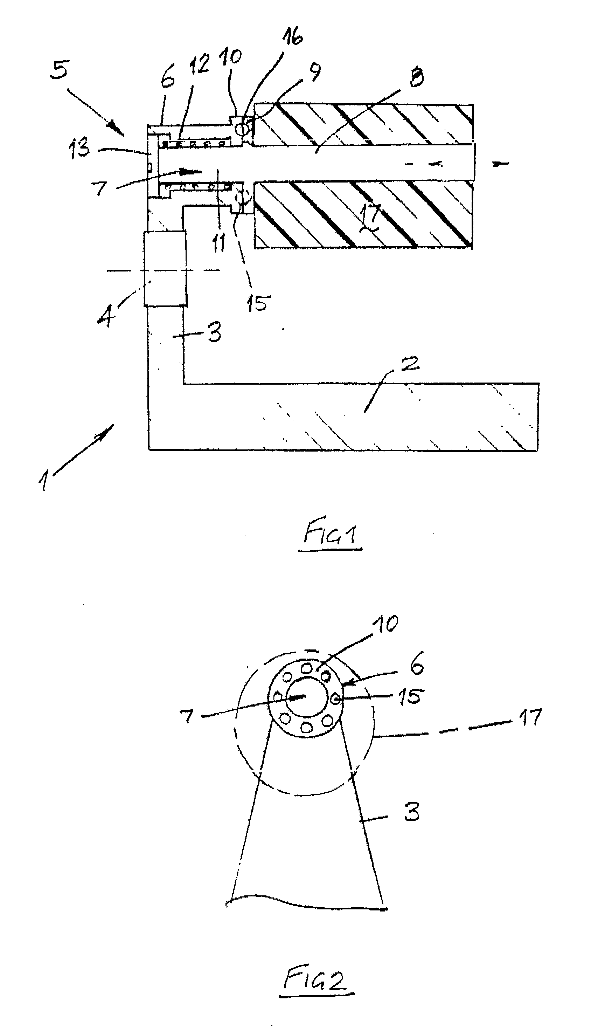

## DETAILED DESCRIPTION WITH REFERENCE TO THE DRAWINGS
Referring to Figures 1 and 2, a pedal indicated generally by the numeral (1), comprises a footlate (2) with a transverse support (3) extending upwardly from one end of the footplate, and supporting a bearing (4) for connection to the crank arm of a crank system in a bicycle.

The upper end (5) of the support (3) carries a hub (6) with an axial opening (7) in it which runs parallel to the long axis of the footplate (2). The opening (7) has therein a rod (8) which has an annular flange (9) abutting an annular flange (10) on the hub, with a section (11) of the rod extending into the hub and carrying a compression spring (12), which is retained within the hub by the head (13) of a screw axially secured in this end of the rod.

The spring reacts between the head of the screw and the interior wall of the hub where the rod exits to a free end (14).

The two flanges (9) and (10) which abut each other are provided with inter-engaging formations in the form of part circular recesses (15) spaced apart on a pitch circle around the flange (10) of the hub, and round ball like projections (16) spaced apart on the same pitch circle on the flange (9) of the rod. Mounted around the rod in axially eccentric manner is a round padded foot stop (17) extending along the length of the rod.

In use, with the pedal secured to a crank arm at the bearing (4), the rod section (11) may be slid axially within the hub, against the biasing of the compression spring (12), to the extent allowed by the depth of the cutting in which the screw head (13) is located. This movement is sufficient to free the ball projection (16) from the co-operating recesses (15), and allow the rod to be rotated. Rotation of the rod causes the distance between the padded foot stop (17) and the footplate (2) to be altered, since the padded foot stop is eccentrically mounted on the rod. Releasing the rod from its axial position extended from the hub allows the ball protrusions to be located within corresponding recesses, and secure the rod against rotation.

In this way, the distance between the foot stop (17) and the footplate (2) can be selectively adjusted. This allows the pedal to be adjusted for a reasonably snug fit for a user's particular footwear and foot size.

The user can thus have the foot stop immediately above his foot where force exerted in an upward or downward direction has immediate effect on the pedal.

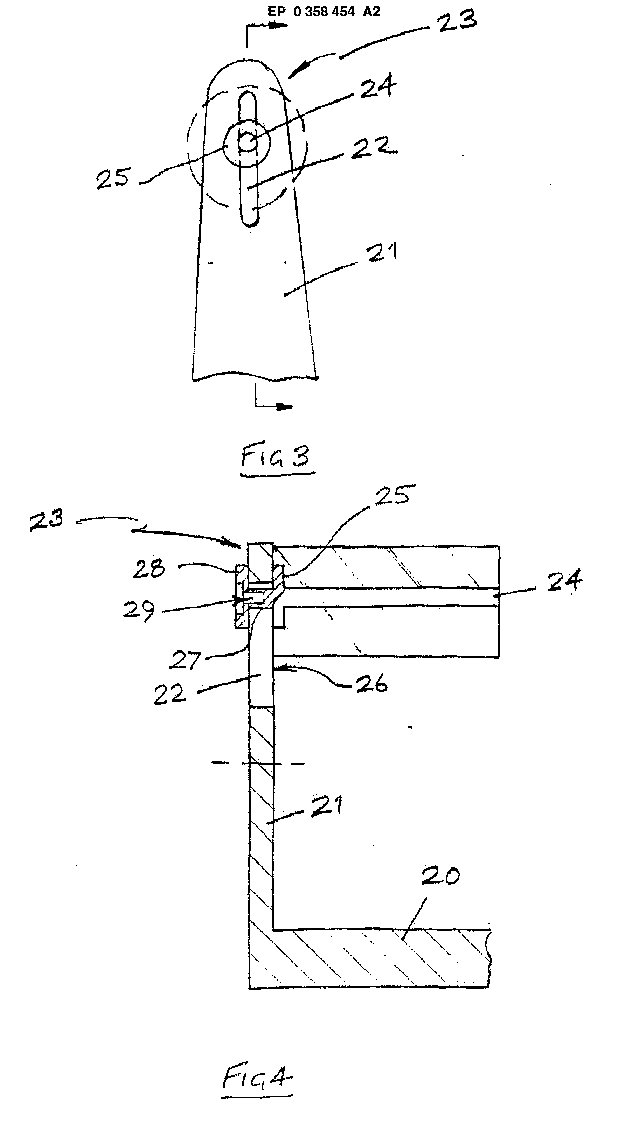

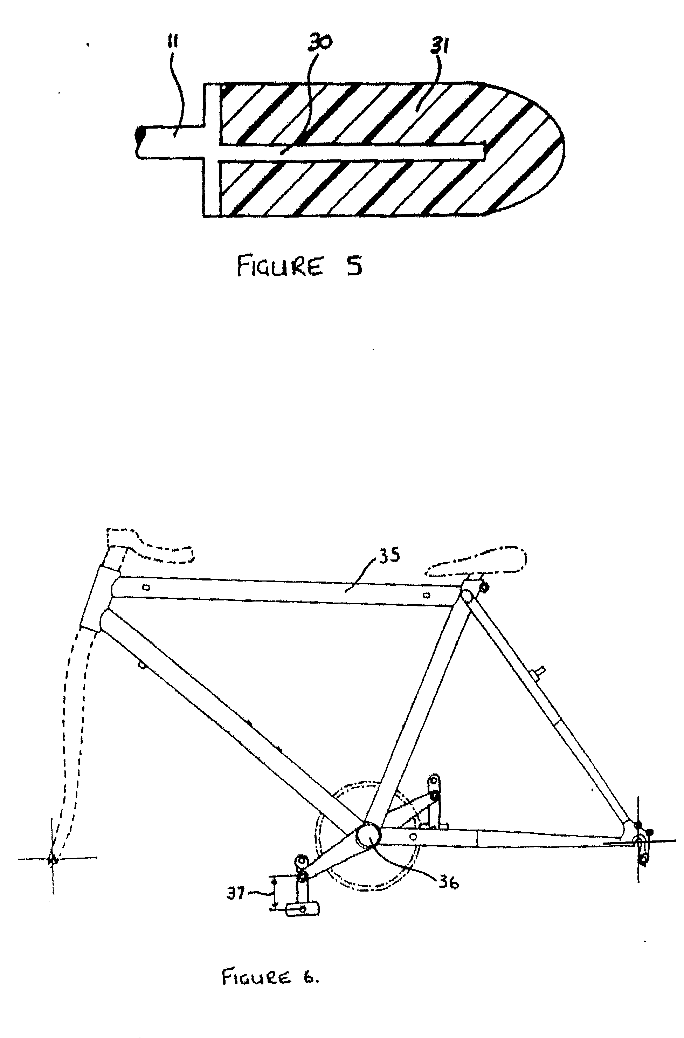

Referring now to Figures 3 and 4, an alternative embodiment is shown. A footplate (20) is shown having an upright transverse support (21) at one end of it. The support (21) has an axial slot (22) towards its opposite free end (23). The slot is fitted with a rod (24) extending parallel to the long axis of the footplate, and which carries a padded foot stop therearound. The rod has an annular flange (25) abutting the inside surface (26) of the support, and the rod extends into the slot, just short of the depth of the slot, in a section (27) which has an annular flange (28) clamped thereover by a screw in an opening (29) section end. Thus by tightening the screw (29) the annular flanges (28) and (25) can clamp down over the surfaces surrounding the slot and hold the rod in position. Loosening the screw in the opening flange (9) will allow the rod to be adjusted along the slot and thus the distance between the foot stop (25) and the footplate can be adjusted.

The invention provides a pedal with an overhead stop adjustable for a user's foot, and allows a user to free his foot from the pedal by sideways movement from between the overhead stop and the footplate.

Referring to Figure 5, an alternative foot stop is shown, to that of Figure 1. Teh design is conceptually the same as that of Figure 1 insofar as the actual slidability of the rod (30) and the accompanying surround (31) are concerned, except that the rod (30) is located coaxially within the foot stop surround (31). To achieve the selective adjustability of the gap between the foot stop surround and the foot plate (not shown) the rod (30) is located eccentrically to the rod section (11) which extends into the hub of the transverse support. In use, rotation of the rod and foot stop surround (30) and (31) around the axle rod section (11) will cause a varying distance between the foot stop and the foot plate. The same ball and biasing system is provided as in the embodiment of Figure 1, to allow for selective rotatability of the foot stop and rod means.

The invention provides a pedal with an overhead stop adjustable for a user's foot, and allows a user to free his foot from the pedal by sideways movement from between the overhead stop and the footplate.

Referring to Figure 6, a bicycle is shown with the front and rear wheel assembly shown diagrammatically only, and having a central frame (35) of a conventional "A" or triangulated form. In this case however, the crank hub (36) of the bicycle is raised above the normal height of such crank hubs, for approximately the same distance as the height (37) of a pedal according to the above described embodiment, being the height from the position of application of force from the pedal to the crank, to the foot plate itself. This is in order to ensure a proper ground clearance for the bicycle when fitted with standard length crank arms. The ground clearance is important, firstly to obtain the minimum 25 degree lateral tilt clearance required by many bicycle standards, and secondly to provide a ground clearance particularly for rough terrain bicycles known as "mountain bikes'. The pedal of the invention is particularly useful in application to mountain bikes owing to the ability of the rider to use the upper foot stop to secure high foot and apply additional force to the pedals and also for stability. The rider over a rough terrain must be able to remove high feet from the pedals in a hurry if necessary, and the pedal of the invention allows this. Preferably for a standard crank arm, the pedal height is 70 mm and the hub is raised 75mm above the conventional position. This can allow a 36 degree lateral tilt clearance, which is highly desirable for a rough terrain bicycle.

Furthermore, it has been found that although it is unlikely that the use of the pedal even on a conventional crank arm will provide a greater overall efficiency, it can provide a smoother power stroke particularly from the top dead centre position of the pedal and more even even application of torque.

## Claims

1. A pedal comprising a foot plate with a transverse support having means for receiving a crank arm, and a foot stop spaced operatively above the foot plate, the foot stop being selectively adjustable to vary the distance between it and the foot plate.

2. A pedal as claimed in claim 1 in which the transverse support carries the foot stop.

3. A pedal as claimed in claim 2 in which the foot stop is eccentric to an axis about which it is selectively rotatable, to thereby vary the said spaced apart distance.

4. A pedal as claimed in claim 3 in which the foot stop has a surround with a generally centrally located rod therein, with one end rotatably mounted to the transverse support, and in which the rod is selectively rotatable by being axially slidable against biasing, to free axially extending stop means on one of the support or the foot stop, from engagement in co-operating formations on the other of the foot stop or support, the rod also being axially slidable to re-engage the stop means with the formations.

5. A pedal as claimed in claim 4 in which the rod is co-axial with the axis of the foot stop surround, and is eccentric to the axis of rotation of the mounting to the transverse support.

6. A pedal as claimed in claim 4 in which the rod is eccentrically located within a foot stop surround and coaxial with the axis of rotation of the mounting to the transverse support.

7. A pedal as claimed in claim 2 in which the foot stop is located in a slidable mounting to be releasable and securable in varying positions of slide to and from the foot plate, to vary the distance therebetween.

8. A pedal as claimed in claim 7 in which the foot stop is axially clampable and mounted through a slot in the transverse support to be clampable in a position of slide within the slot.

9. A bicycle having a set of two pedals each as claimed in any one of the preceding claims, the pedals being secured to a crank and sprocket wheel assembly, which has a ground clearance higher than a conventional bicycle by approximately the operative height of the pedals, and which is arranged to provide at least a 30 degree lateral tilt clearance for the free pedal ends.

10. A bicycle as claimed in claim 9 in which the pedal height is approximately 70 mm and the lateral tilt clearance is 36 degrees.

5

6 12 10 16

13

7

4

11

15

9

8

17

1

3

2

*Fig1*

10

6

15

7

17

3

*Fig2*

Fig 3

Fig 4

FIGURE 5

FIGURE 6.